# EUROPÄISCHE PATENTSCHRIFT

(11) **EP 2 256 038 B1**
(45) Veröffentlichungstag und Bekanntmachung des Hinweises auf die Patenterteilung: **12.12.2012**
(21) Anmeldenummer: 10008979.6
(22) Anmeldetag: 14.04.2008
(51) Int. Cl.: B64F 1/32, B65G 65/00, B65G 67/08

(54) **Anlage zum Einladen von Gepäckstücken in Container**
Installation for loading luggage into containers
Installation de chargement de bagages dans un conteneur

(30) Priorität: 12.04.2007 DE 102007017288
(43) Veröffentlichungstag der Anmeldung: 01.12.2010
(62) Teilanmeldung aus: 08007288.7
(73) Patentinhaber: Lödige Machine Warburg GmbH, 34414 Warburg (DE)
(72) Erfinder: Lödige, Rudolf, 33100 Paderborn (DE)
(74) Vertreter: Ostermann, Thomas

(56) Entgegenhaltungen:
- DE-A1- 19 719 748
- DE-U- 7 313 036
- JP-A- 5 208 731
- US-A- 3 838 763
- US-A1- 2006 133 913

## Beschreibung

Die Erfindung betrifft eine Anlage zum Einladen von Gepäckstücken in in Flugzeugen mitführbaren Container nach dem Oberbegriff des Patentanspruchs 1.

Es ist bekannt, die für den Gepäcktransport in Flugzeugen vorgesehenen Container maschinell zu beladen, dafür werden Handlingsroboter eingesetzt. Ein derartiger Roboter kann jeweils nur ein einziges Gepäckstück aufnehmen und durch die Beladeöffnung des jeweiligen Containers hindurch in das Containerinnere hineinbringen, um es dort an einer bestimmten Stelle abzulegen. Danach fährt der Roboter mit dem Gepäckgreifer zurück zu der Station, von der das nachfolgende Gepäckstück aufgenommen wird. Das gesamte Arbeitsspiel des Handlingsroboters für den Hinund Rückweg des Gepäckgreifers nimmt erhebliche Zeit in Anspruch und lässt sich nicht mit Rücksicht auf den sicheren Transport des jeweiligen Gepäckstücks beliebig beschleunigen. Gemessen an seiner Beladekapazität ist ein derartiger Handlingsroboter eine aufwendige Maschine.

Aus der US 3 838 763 A ist eine Anlage zum Einladen von Gepäckstücken in Containern bekannt, wobei die Container nach dem Einladen der Gepäckstücke in Flugzeuge transportiert werden. Die Container sind an einer Ladestation angeordnet und weisen auf einer einer Transportvorrichtung zugewandten Seite eine Beladungsöffnung auf, durch die die Gepäckstücke in das Containerinnere befördert werden können. Zum Zuführen der Gepäckstücke ist eine Transportvorrichtung 13, 14 vorgesehen, an die sich ein Linearförderer 16 sowie ein Querförderer 3 anschließen. Nachteilig an der bekannten Anlage ist, dass ein Verteilen der Gepäckstücke im Containerinneren nur in einer Richtung erfolgen kann.

Aus der US 2006/0133913 A1 ist eine Anlage zum Einladen von Gepäckstücken in Flugzeugen bekannt, die eine schräggestellte Transportvorrichtung aufweist, an der sich an ebenfalls schräg verlaufender Linearförderer und ein sich an demselben horizontal verlaufender Querförderer anschließt. Nachteilig an der bekannten Anlage ist, dass die Gepäckstücke mittels des Querförderers nur in einer Richtung zu einem Transportteppich in Längsrichtung des Flugzeugrumpfes befördert werden können.

Der Erfindung liegt die Aufgabe zugrunde, eine Anlage der eingangs genannten Art zu schaffen, die gemessen an dem erforderlichen maschinellen Aufwand eine hohe Beladekapazität aufweist. Diese Aufgabe wird in Verbindung mit dem Oberbegriff durch die Merkmale des Patentanspruchs 1 gelöst.

Für die Erfindung ist wesentlich, dass mit den vorgesehenen Fördermitteln für die Gepäckstücke eine Beladung der Container mit dichter Folge der Gepäckstücke vorgenommen werden kann. Die relative Beweglichkeit zwischen dem Linearförderer einschließlich dem Querförderer einerseits und dem Container andererseits ermöglicht es, alle Stellen im Innenraum des jeweils zu beladenden Containers zu erreichen, so daß der Container mit den Gepäckstücken von unten nach oben hin vollgepackt werden kann. Hierbei können die Gepäckstücke schonend abgesetzt werden, indem der Linearförderer oder der Querförderer zum einen und der Container zum anderen relativ zueinander so bewegt werden, daß beim Absetzvorgang der abgebende Förderer sich vom jeweiligen Abladeplatz entfernt.

Vorteilhafte Ausgestaltungsmerkmale der Erfindung ergeben sich aus den Unteransprüchen.

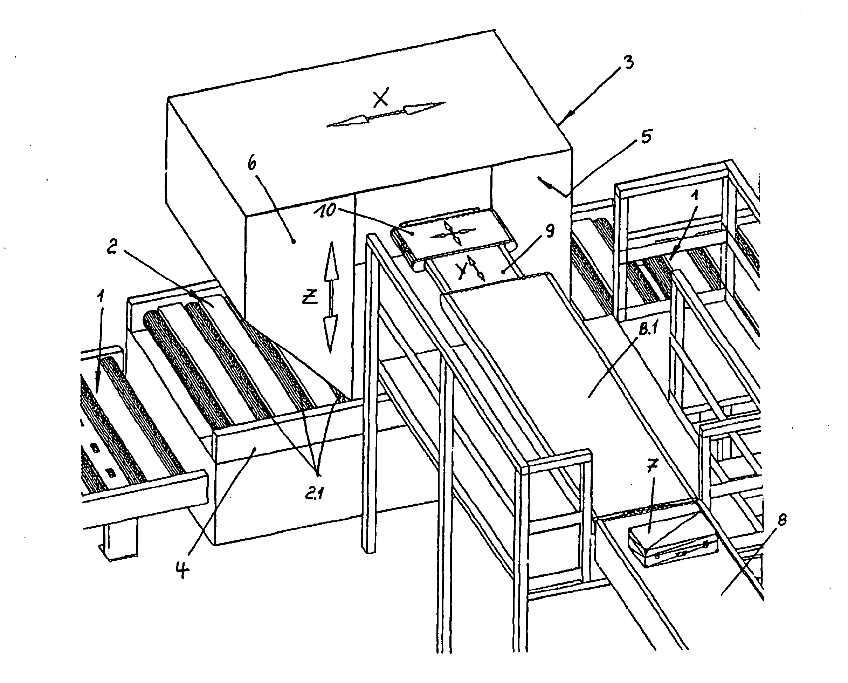

Die Erfindung wird nachfolgend anhand der Zeichnung an einem Ausführungsbeispiel noch näher erläutert. Die Zeichnung zeigt in schematischer, perspektivischer Ansicht schräg von oben her gesehen eine Anlage zum Einladen von Gepäckstücken in Container.

Im einzelnen erkennt man in der Zeichnung eine erste Fördervorrichtung 1, in die eine Ladestation 2 integriert ist. Die Ladestation 2 weist einen Bereitstellungsplatz für einen zu beladenden Container 3 auf, und dieser Bereitstellungsplatz befindet sich auf einem Hubtisch 4, der aus der Förderebene der Fördervorrichtung 1 abgesenkt oder daraus nach oben hin angehoben werden kann. Die Fördervorrichtung 1 dient zum Befördern der Container 3 zur Ladestation 2 hin und von dort weg. So weist der Hubtisch 4 der Ladestation 2 eine in niveaugleicher Position an die Fördervorrichtung 1 anschließende Fördereinrichtung 2.1 auf, in deren Förderrichtung der jeweilige Container 3 sowohl vor- als zurückgefahren werden kann, worauf nachstehend noch näher eingegangen werden wird.

Die Container 3 sind lediglich an einer ihrer Längsseiten offen und weisen dort eine Beladeöffnung 5 auf, an die ebenengleich mit der Beladeöffnung 5 fluchtend eine Seitenwand 6 anschließt. Hinter dieser Seitenwand 6 befindet sich im Containerinnern ein erheblicher Teil des gesamten Stauraums. Die Container 3 werden an der Ladestation 2 auf dem Bereitstellungsplatz stets so positioniert, daß die Beladeöffnung 5 immer an derselben Seite der Ladestation 2 bzw. des darauf befindlichen Bereitstellungsplatzes angeordnet ist.

Quer zur Fördervorrichtung 1 erstreckt sich eine Transportvorrichtung 8 für die in den jeweiligen Container 3 einzuladenden Gepäckstücke 7. Die Transportvorrichtung 8 reicht mit ihrem Förderende 8.1 bis an die Ladestation 2 heran. Das Förderende 8.1 der Transportvorrichtung 8 befindet sich deshalb nahe an der Beladeöffnung 5 des jeweiligen auf der Ladestation 2 bereitgestellten Containers 3. An diesem Förderende 8.1 ist ein unterseitiger Stauraum versehen, in dem sowohl ein Linearförderer 9 als auch ein Querförderer 10 Platz finden. Der Linearförderer 9 und der Querförderer 10 sind in Richtung der Förderrichtung der Transportvorrichtung 8 über deren Förderende 8.1 hinaus ausfahrbar. Die Förderrichtung des Querförderers 10 steht senkrecht zu der des Linearförderers 9, dessen Förderrichtung mit der Transportrichtung der Transportvorrichtung 8 fluchtet. Der Querförderer 10 ist am Linearförderer 9 relativ dazu längsverfahrbar geführt, und er ist mittels einer am Ende des Linearförderers 9 ausfahrbaren Vorrichtung in einer Endposition so gehalten, daß die Förderebenen des Linearförderers 9 und des Querförderers 10 niveaugleich oder unter einem stumpfen Winkel aneinander anschliessen. Vorzugsweise ist hierbei zumindest die Förderebene des Querförderers 10 horizontal ausgerichtet.

Der Querförderer 10 hat in seiner Förderrichtung eine Länge, die gleich groß oder geringfügig größer als die Breite des Linearförderers 9 ist. Dieses Längenmaß des Querförderers 10 und entsprechend die Breite des Linearförderers 9 ist erheblich geringer als die Weite der Beladeöffnung 5 in Breitenrichtung der Container 3 gesehen. Die Beladeöffnung 5 reicht über die gesamte Höhe der Container 3, und während des Beladevorgangs ist durch eine Relativbewegung zwischen dem jeweiligen Container 3 und dem Linearförderer 9 einschließlich dem Querförderer 10 dafür gesorgt, daß die Gepäckstücke beim Einlagern in den Containern keine größeren Fallhöhen zu überwinden haben.

So erfolgt die Beladung des jeweiligen Containers 3, indem die Gepäckstücke 7, die über die Transportvorrichtung 8 heranbefördert werden, im Inneren des Containers 3 nach und nach in übereinanderliegenden Lagen angeordnet werden. Hierzu befindet sich bei Beginn des Beladevorgangs der Container 3 in seiner oberen Position in Richtung des Pfeiles Z, und es erfolgt das Einladen der Gepäckstücke, indem entweder nur der Linearförderer 9 oder der Linearförderer 9 zusammen mit dem Querförderer 10 in Richtung des Pfeiles Y aus- und eingefahren werden, wobei des weiteren der Container 3 über die Fördereinrichtung 2.1 der Beladestation 2 in Richtung des Pfeiles X hin- und herverfahren wird und des weiteren die Förderrichtung des Querförderers umgekehrt wird. Das Einlagern der Gepäckstücke in der X-Richtung wird über den Querförderer 10 vorgenommen, der hierzu - wie in der Zeichnung dargestellt - am Ende des Linearförderers 9 positioniert ist. Das Einlagern der Gepäckstücke 7 in der Y-Richtung erfolgt ausschließlich über den Linearförderer 9, der hierbei zunehmend unter die Fördervorrichtung 8 eingefahren wird. Das weitere Einlagern der Gepäckstücke 7 in den höheren Lagerebenen im Container 3 geschieht, indem der Container 3 nach und nach über den Hubtisch abgesenkt wird.

Alternativ können anstelle des Containers 3 auch der Linearförderer 9 und der Querförderer 10 in der vertikalen X-Z-Ebene bewegt werden. Dazu kann das Förderende 8.1 der Transportvorrichtung 8 auf- und abschwenkbar auf einer Hubvorrichtung aufgelagert sein, gegebenenfalls kommt auch ein seitliches Verschieben in der X-Richtung in Betracht. Dementsprechend muß für eine störungsfreie Übergabe der Gepäckstücke 7 von der Transportvorrichtung 8 auf deren Förderende 8.1 gesorgt sein.

## Patentansprüche

1. Anlage zum Einladen von Gepäckstücken (7) in in Flugzeugen mitführbaren Containern (3), die an einer Längsseite eine über die gesamte Containerhöhe reichende Beladeöffnung (5) aufweisen, mit einer Ladestation (2) zur Aufnahme je eines der Container (3) mit Ausrichtung deren Beladeöffnungen (5) zur selben Seite der Ladestation (2) hin, mit einer Transportvorrichtung (8) für die Gepäckstücke (7), die ein Förderende (8.1) aufweist, an dem ein Linearförderer (9) sowie ein damit zusammenwirkender Querförderer (10) angeordnet sind, dass der Linearförderer (9) mit dem Querförderer (10) und/oder die Ladestation (2) für die Container (3) jeweils relativ zueinander höhenverfahrbar sind, **dadurch gekennzeichnet, dass** sich an die Beladeöffnung (5) fluchtend mit ihrer Öffnungsebene eine Seitenwand (6) anschließt, hinter der sich ein Teil des Stauraums im Containerinneren befindet, dass das Förderende (8.1) der Transportvorrichtung (8) bis an die Ladestation (2) heranreicht, dass sich an dem Förderende (8.1) der Transportvorrichtung (8) ein unterseitiger Aufnahmeraum befindet, in welchem der Linearförderer (9) und der Querförderer (10) in ihrer eingefahrenen Position angeordnet sind, und dass der Linearförderer (9) und der Querförderer (10) in Förderrichtung der Transportvorrichtung (8) über das Föderende (8.1) hinaus und durch die Beladeöffnung (5) des jeweils auf der Ladestation (2) aufgenommenen Containers (3) hindurch bis in das Containerinnere hinein ausfahrbar sind.

2. Anlage nach Anspruch 1, **dadurch gekennzeichnet, dass** die Transport- und Ausfahrrichtung des Linearförderers (9) am Ende der Transportvorrichtung (8) senkrecht zu der Öffnungsebene der Beladeöffnungen (5) der auf der Ladestation (2) aufgenommenen Container (3) steht.

3. Anlage nach Anspruch 2, **dadurch gekennzeichnet, dass** die Förderrichtungen der Transportvorrichtung (8) und des an deren Ende ausgefahrenen Linearförderers (9) miteinander fluchten.

4. Anlage nach einem der Ansprüche 1 bis 3, **dadurch gekennzeichnet, dass** die Ladestation (2) zur Aufnahme der Container (3) einen Hubtisch (4) aufweist.

5. Anlage nach einem der Ansprüche 1 bis 4, **dadurch gekennzeichnet, dass** das Ende (8.1) der Transportvorrichtung (8) einschließlich dem Linerarförderer (9) sowie dem Querförderer (10) auf einer Hubvorrichtung angeordnet ist.

6. Anlage nach einem der Ansprüche 1 bis 5, **dadurch gekennzeichnet, dass** der Linearförderer (9) schmaler und der Querförderer (10) kürzer als die Beladeöffnung (5) der Container (3) breit ist.

7. Anlage nach Anspruch 6, **dadurch gekennzeichnet, dass** die Ladestation (2) mit einer Einrichtung (2.1) zum Verfahren der Container (3) quer zur Längsrichtung des Linearförderers (9) ausgestattet ist.

8. Anlage nach Anspruch 6 oder 7, **dadurch gekennzeichnet, dass** das Ende (8.1) der Transportvorrichtung (8) einschließlich dem Linearförderer (9) sowie dem Querförderer (10) in Breitenrichtung der Beladeöffnung (5) der auf der Ladestation (2) aufgenommenen, Container (3) verschieblich ist.

9. Anlage nach einem der Ansprüche 1 bis 8, **dadurch gekennzeichnet, dass** die Ladestation (2) Teil eines Container-Förderers (1) ist, dessen Förderrichtung im Anschlussbereich der Transportvorrichtung (8) senkrecht zu deren Förderrichtung steht.

10. Anlage nach einem der Ansprüche 1 bis 9, **dadurch gekennzeichnet, dass** der Querförderer (10) mit einer Einrichtung zur Umsteuerung seiner Förderrichtung versehen ist.

11. Anlage nach einem der Ansprüche 1 bis 10, **dadurch gekennzeichnet, dass** die Transportvorrichtung (8), der Linearförderer (9) und der Querförderer (10) Bandförderer sind.

## Claims

1. Installation for loading luggage (7) into containers (3) disposed in an aircraft and each having a loading opening (5) that extends over the full height of the container on one longitudinal side thereof, comprising a loading station (2) for receiving one of the containers (3) at a time whose loading openings (5) are all facing the same side of the loading station (2), a transport device (8) for the luggage (7) which has a delivery or head end (8.1) to which a linear conveyor (9) and a transverse conveyor (10) coacting therewith are fitted wherein said linear conveyor (9) with said transverse conveyor and/or said loading station (2) for the containers (3) are vertically adjustable in relation to each other, **characterized in that** a sidewall (6) adjoins the loading opening (5) in alignment with an opening plane thereof whose rear comprise part of the stowage space inside the containers, that the delivery end (8.1) of the transport device (8) extends right up to the loading station (2), that the underside of said delivery end (8.1) of the transport device (8) comprises a space for the linear conveyor (9) and the transverse conveyor (10) to be received in while they are in retracted position, and that said linear conveyor (9) and said transverse conveyor (10) are displaceable beyond the delivery end (8.1) in the conveying direction of the transport device (8) and through the loading opening (5) of a container (3) positioned in the loading station (2) right into the container interior.

2. Installation according to Claim 1, **characterized in that** the transport and extension direction of the linear conveyor (9) is perpendicular to the plane of the loading openings (5) of the containers (3) received by the loading station (2).

3. Installation according to Claim 2, **characterized in that** the conveying directions of the transport device (8) and the linear conveyor (9) extended at the end of said device are in alignment with one another.

4. Installation according to any of the preceding Claims 1 to 3, **characterized in that** the loading station (2) is provided with a lifting table (4) for receiving a container (3).

5. Installation according to any of the preceding Claims 1 to 4, **characterized in that** the end (8.1) of the transport device (8) including the linear conveyor (9) and the transverse conveyor (10) is arranged on a lifting device.

6. Installation according to any of the Claims 1 to 5, **characterized in that** the linear conveyor (9) is of smaller width and the transverse conveyor (10) is of shorter length than the loading opening (5) of a container (3).

7. Installation according to Claim 6, **characterized in that** the loading station (2) is fitted with a device (2.1) for moving the containers (3) cross to the longitudinal axis of the linear conveyor (9).

8. Installation according to Claim 6 or 7, **characterized in that** the end (8.1) of the transport device (8) including the linear conveyor (9) and the transverse conveyor (10) can be shifted along the width of the loading opening (5) of the containers (3) positioned in the loading station (2).

9. Installation according to any of the preceding Claims 1 to 8, **characterized in that** the loading station (2) is part of a container conveyor (1) whose conveying direction in the junction area with the transport device (8) is perpendicular to the conveying direction of said device (8).

10. Installation according to any of the preceding Claims 1 to 9, **characterized in that** the transverse conveyor (10) is fitted with means for reversing the conveying direction thereof.

11. Installation according to any of the preceding Claims 1 to 10, **characterized in that** the linear conveyor (9) and the transverse conveyor (10) are belt conveyors.

## Revendications

1. Installation pour le chargement de bagages (7) dans des conteneurs (3), qui, pouvant être transportés dans des avions, présentent, sur un côté longitudinal, une ouverture de chargement (5), qui s'étend sur toute la hauteur du conteneur, avec une station de chargement (2) pour la réception de chacun des conteneurs (3), les ouvertures de chargement (5) étant orientées vers le même côté de la station de chargement (2), avec un dispositif de transport (8) des bagages (7), qui présente une extrémité d'acheminement (8.1), à laquelle sont disposés un transporteur linéaire (9), ainsi qu'un transporteur transversal (10), qui coopèrent l'un avec l'autre, sachant que le transporteur linéaire (9) accompagné du transporteur transversal (10) et / ou la station de chargement (2) des conteneurs (3) peuvent être déplacés en hauteur l'un par rapport à l'autre, **caractérisée en ce qu'**une paroi latérale (6) est contigüe à l'ouverture de chargement (5), en alignement avec son plan d'ouverture, paroi derrière laquelle se trouve une partie de l'espace de rangement à l'intérieur du conteneur, que l'extrémité (8.1) du dispositif de transport (8) parvient jusqu'à la station de chargement (2), que du côté inférieur de l'extrémité (8.1) du dispositif de transport (8), se trouve un espace de réception dans lequel sont disposés le transporteur linéaire (9) et le transporteur transversal (10) dans leur position escamotée, et que le transporteur linéaire (9) et le transporteur transversal (10) peuvent être extraits dans la direction de transport du dispositif de transport (8), au-delà de l'extrémité d'acheminement (8.1), et à travers l'ouverture de chargement (5) jusqu'à l'intérieur de chaque conteneur (3) pris en charge à la station de chargement (2).

2. Installation selon la revendication 1, **caractérisée en ce que** la direction de transport et d'extraction du transporteur linéaire (9) à l'extrémité du dispositif de transport (8) est perpendiculaire au plan d'ouverture de l'ouverture de chargement (5) du conteneur (3) pris en charge à la station de chargement (2).

3. Installation selon la revendication 2, **caractérisée en ce que** les directions d'acheminement du dispositif de transport (8) et du transporteur linéaire (9), extraits à l'extrémité de celui-ci, sont en alignement.

4. Installation selon l'une des revendications 1 à 3, **caractérisée en ce que** la station de chargement (2) est dotée d'une table élévatrice pour la réception des conteneurs (3).

5. Installation selon l'une des revendications 1 à 4, **caractérisée en ce que** l'extrémité (8.1) du dispositif de transport (8), y compris le dispositif de transport (8) ainsi que le transporteur transversal (10), est disposée sur un mécanisme élévateur.

6. Installation selon l'une des revendications 1 à 5, **caractérisée en ce que** le transporteur linéaire (9) est plus étroit et que le transporteur transversal (10) est plus court que l'ouverture de chargement (5) des conteneurs (3).

7. Installation selon la revendication 6, **caractérisée en ce que** la station de chargement (2) est équipée d'un dispositif (2.1), qui est destiné à déplacer les conteneurs (3) transversalement par rapport à la direction longitudinale du transporteur linéaire (9).

8. Installation selon revendication 6 ou 7, **caractérisée en ce que** l'extrémité (8.1) du dispositif de transport (8), y compris le transporteur linéaire (9) et le transporteur transversal (10), peut être déplacée dans la direction de la largeur de l'ouverture de chargement (5) des conteneurs (3) pris en charge à la station de chargement (2).

9. Installation selon l'une des revendications 1 à 8, **caractérisée en ce que** la station de chargement (2) fait partie d'un transporteur de conteneurs (1), dont la direction de transport est perpendiculaire à la direction de transport du dispositif de transport (8), dans la zone de raccordement de celui-ci.

10. Installation selon l'une des revendications 1 à 9, **caractérisée en ce que** le transporteur transversal (10) est pourvu d'un dispositif de renversement de sa direction de transport.

11. Installation selon l'une des revendications 1 à 10, **caractérisée en ce que** le dispositif de transport (8), le transporteur linéaire (9) et le transporteur transversal (10) sont des transporteurs à bande.
